# FASCICULE DE BREVET EUROPEEN

(11) **EP 1 015 264 B1**
(45) Date de publication et mention de la délivrance du brevet: **15.01.2003**
(21) Numéro de dépôt: 98941576.5
(22) Date de dépôt: 10.08.1998
(51) Int. Cl.: B60G 15/06, B60G 17/02

(54) **DISPOSITIF DE SUSPENSION DE ROUE DE VEHICULE**
RADAUFHÄNGUNGSVORRICTUNG FÜR FAHRZEUGE
VEHICLE WHEEL SUSPENSION DEVICE

(30) Priorité: 24.09.1997 FR 9711868
(43) Date de publication de la demande: 05.07.2000
(73) Titulaire: MICHELIN AVS, 78000 Versailles (FR)
(72) Inventeur: DE FONTENAY, Etienne, F-58300 Decize (FR); JEAN, Philippe, F-58260 La Machine (FR)
(74) Mandataire: Abello, Michel
(86) Numéro de dépôt international: FR9801779
(87) Numéro de publication internationale: WO99015351

(56) Documents cités:
- EP-A- 0 092 066
- EP-A- 0 265 059
- EP-A- 0 301 517
- EP-A- 0 619 196
- WO-A-91/06438
- DE-A- 3 136 954
- DE-A- 3 619 942
- DE-A- 3 713 699
- FR-A- 2 297 150

## Description

L'invention est relative à un dispositif de suspension de roue de véhicule, comportant un amortisseur monté entre le porte-moyeu de la roue et la caisse du véhicule, et un ressort hélicoïdal monté entre une coupelle inférieure solidaire du cylindre de l'amortisseur et une coupelle supérieure montée solidaire de la tige de l'amortisseur.

Ce type de dispositif de suspension, tel que défini dans le préambule de la revendication 1, est connu par exemple des documents EP-A-0092066, EP-A-0 265 059, EP-A-0 301 517 et EP-A-0 619 196.

Dans les dispositifs connus de ce genre, en particulier, les suspensions de type Mac Pherson (voir par exemple EP-A-0 092 066 et EP-A-0 265 059), une butée à billes est montée entre la coupelle supérieure et la chapelle de caisse du véhicule. Cette butée à billes présente, lors du braquage de la direction, un seuil de résistance au glissement provoquant une raideur indésirable de la direction.

En outre, dans les dispositifs connus des documents EP-A-0 092 066 et EP-A-0 265 059 un élément élastomère solidaire d'une pièce de fixation à la caisse du véhicule est monté entre la butée à billes et la caisse, ladite pièce de fixation à la caisse étant réglable angulairement par rapport à la caisse. Dans le dispositif connu du document EP-A-0 301 517 un assemblage élastomère lamifié solidaire d'une pièce de fixation à la caisse du véhicule est monté entre la butée et la caisse. Dans le dispositif connu du document EP-A-0 619 196 la coupelle supérieure est solidaire d'un élément élastomère solidaire d'une pièce de fixation à la caisse du véhicule.

Un premier but de l'invention est de perfectionner les dispositifs de suspension de type connu, en supprimant la butée à billes supérieure et en la remplaçant par un système élastique dont le couple d'actionnement est sensiblement proportionnel à l'angle de pivotement.

Un deuxième but de l'invention est de réaliser ce système élastique sous forme modulaire, de manière à permettre un assemblage en usine d'un ensemble modulaire interchangeable comprenant un amortisseur et un ressort associés.

Un troisième but de l'invention est de permettre un pré-réglage en torsion de cet ensemble interchangeable, après assemblage à la caisse du véhicule, pour assurer la compensation d'un effort latéral éventuel dû au pneumatique.

L'invention a pour objet un dispositif de suspension de roue de véhicule comportant un amortisseur monté entre le porte-moyeu de la roue et la caisse du véhicule, et un ressort hélicoïdal monté entre une coupelle inférieure solidaire du cylindre de l'amortisseur et une coupelle supérieure montée solidaire de la tige de l'amortisseur, caractérisé en ce que la coupelle supérieure est solidaire d'un assemblage élastomère lamifié solidaire d'une pièce de fixation à la caisse du véhicule, de préférence à une chapelle ménagée dans la caisse du véhicule, ladite pièce de fixation à la caisse étant réglable angulairement par rapport à la caisse.

Selon d'autres caractéristiques de l'invention :
- la pièce de fixation à la caisse du véhicule est conformée en coupelle convexe ajustée à la surface intérieure de la chapelle de caisse ;
- l'extrémité supérieure du ressort hélicoïdal est indexée angulairement par insertion dans une partie de l'une des coupelles inférieure ou supérieure, laquelle est avantageusement surmoulée par un matériau élastomère, au moins dans la zone d'appui du ressort ;
- la pièce de fixation à la caisse est montée pivotante par rapport à ladite caisse par l'intermédiaire d'un levier de réglage en rotation ;
- la pièce de fixation et la caisse comportent chacune une pluralité d'orifices situés sur des cercles de même diamètre et espacés de manière à permettre une indexation angulaire lors de l'assemblage mécanique de la pièce de fixation à la caisse et de la caisse ;
- la pièce de fixation à la caisse présente une partie radialement intérieure coopérant avec une butée de détente pour empêcher le dégagement de l'amortisseur en cas de décollage de la roue de véhicule avec rupture de l'assemblage élastomère lamifié ;
- la partie radialement intérieure est revêtue au moins partiellement ou surmoulée par un matériau amortisseur de choc ;
- la caisse comporte une pluralité de premières conformations et la pièce de fixation à la caisse une pluralité de deuxièmes conformations, et une première conformation de la caisse coopère avec une deuxième conformation de la pièce de fixation à la caisse pour assurer une indexation entre caisse et pièce de fixation à la caisse ;
- la pièce de fixation à la caisse est conformée pour s'encliqueter dans la caisse.

L'invention sera mieux comprise grâce à la description qui va suivre, donnée à titre d'exemple non limitatif, en se référant au dessin annexé.

Sur ce dessin :
- la figure 1 représente schématiquement une vue en élévation verticale avec coupe partielle d'un dispositif de suspension selon l'invention ;
- la figure 2 représente schématiquement une vue partielle en coupe agrandie d'un dispositif de suspension analogue à celui de la figure 1 ;
- la figure 3 représente schématiquement une vue agrandie en coupe selon la ligne III-III de la figure 4 d'une deuxième variante de réalisation de l'invention ;
- la figure 4 représente schématiquement une vue de dessus du dispositif de la figure 3 ;
- la figure 5 représente schématiquement une demi-vue en coupe selon la ligne V-V de la figure 6 d'une troisième variante de réalisation de l'invention ;
- la figure 6 représente schématiquement une demi-vue de dessus du dispositif de la figure 5 ;
- la figure 7 représente schématiquement une demi-vue en coupe d'une quatrième variante de réalisation de l'invention ;
- la figure 8 représente schématiquement une demi-vue en coupe d'une cinquième variante de réalisation de l'invention.

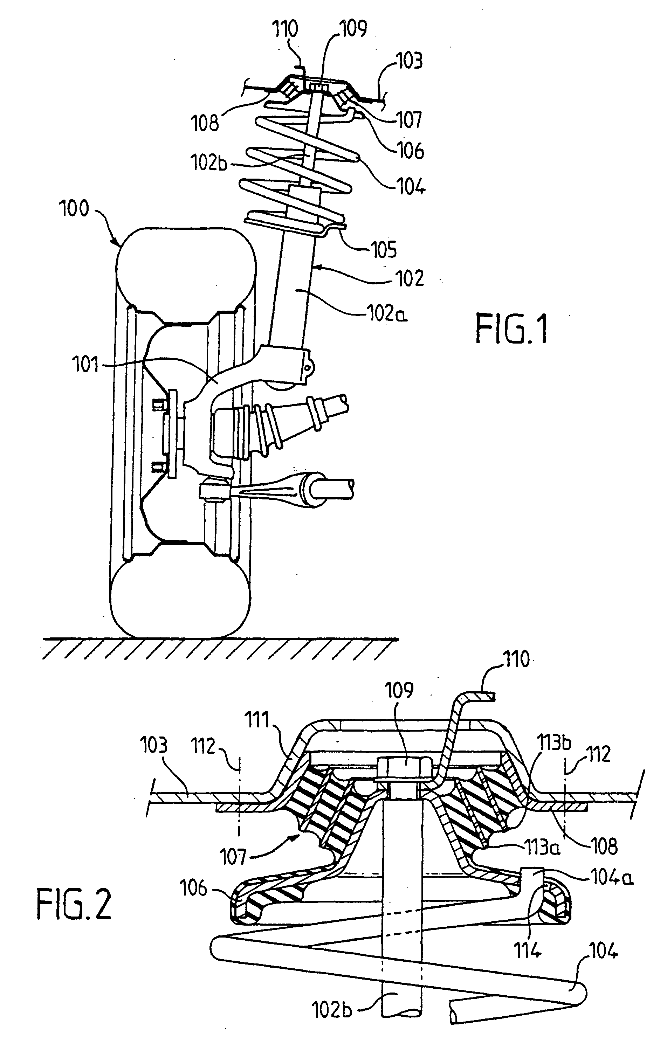

En référence aux figures 1 à 8, les repères identiques désignent des éléments identiques ou fonctionnellement équivalents.

Sur la figure 1, un ensemble de roue 100 comportant un pneumatique, une jante et des boulons de fixation est monté sur le moyeu d'un porte-moyeu 101 de véhicule. Un amortisseur 102 est monté entre le porte-moyeu 101 et la caisse 103 du véhicule. Un ressort hélicoïdal 104 est monté entre une coupelle inférieure 105 solidaire du cylindre 102a de l'amortisseur 102 et une coupelle supérieure 106 montée solidaire de la tige 102b de l'amortisseur 102.

Selon l'invention, la coupelle supérieure 106 est solidaire d'un assemblage élastomère 107 lamifié, lui-même solidaire d'une pièce de fixation 108 à la caisse 103 du véhicule.

De manière connue, l'écrou 109 de fixation de la tige 102b d'amortisseur à la coupelle supérieure 106 maintient également une butée 110 de détente empêchant le dégagement de l'amortisseur en cas de décollage de la roue de véhicule avec rupture de l'assemblage élastomère lamifié 107.

La caisse 103 du véhicule est conformée de manière à présenter une chapelle de caisse 111. La pièce 108 de fixation à la caisse 103 du véhicule est avantageusement conformée en coupelle convexe ajustée à la surface intérieure de la chapelle 111 de caisse. La fixation de la pièce 108 à la caisse 103 est effectuée par assemblage mécanique, boulonnage ou vissage schématisé par les traits d'axe 112. L'assemblage 107 élastomère lamifié est constitué essentiellement par moulage d'élastomère présentant une faible résistance à la torsion avec interposition de troncs de cône métallique 113a, 113b d'épaisseur faible entre les couches d'élastomère.

L'ensemble lamifié obtenu par surmoulage d'élastomère de dureté inférieure à 50 degrés Shore présente une faible résistance à la torsion sur une grande plage de braquage angulaire. L'effet de la lamification de cet ensemble est d'obtenir l'addition des angles de torsion de chaque tronc de cône élastomère interposé entre la coupelle supérieure 106, le premier tronc de cône 113a, le deuxième tronc de cône 113b, et la coupelle convexe 108.

Avantageusement, on prévoit un surmoulage de la coupelle supérieure 106 au moins au voisinage de l'orifice 114 d'engagement de l'extrémité 104a du ressort 104 dans la coupelle 106. Ce surmoulage au moins local permet d'éviter les bruits de choc tout en fixant l'extrémité 104a du ressort hélicoïdal 104 pour assurer son indexation angulaire. Pour éviter des reprises inutiles de surmoulage, on effectue de préférence le surmoulage en une seule opération, ce qui conduit à surmouler également la surface supérieure de la coupelle 106 et la majeure partie de son évasement intérieur.

L'invention décrite en référence à des parties tronconiques 113a, 113b en métal n'est nullement limitée à ce matériau, mais s'étend à d'autres matériaux aptes à être surmoulés et présentant une caractéristique en torsion plus raide que l'élastomère de surmoulage : on peut notamment citer tous les textiles, les non-tissés, les matériaux thermoplastiques ou thermo-durcissables aptes à être surmoulés. L'essentiel est de séparer les zones déformables angulairement constituées par les parties surmoulées en élastomère et les zones présentant une rigidité à la torsion constituée par les troncs de cône 113a, 113b intermédiaires.

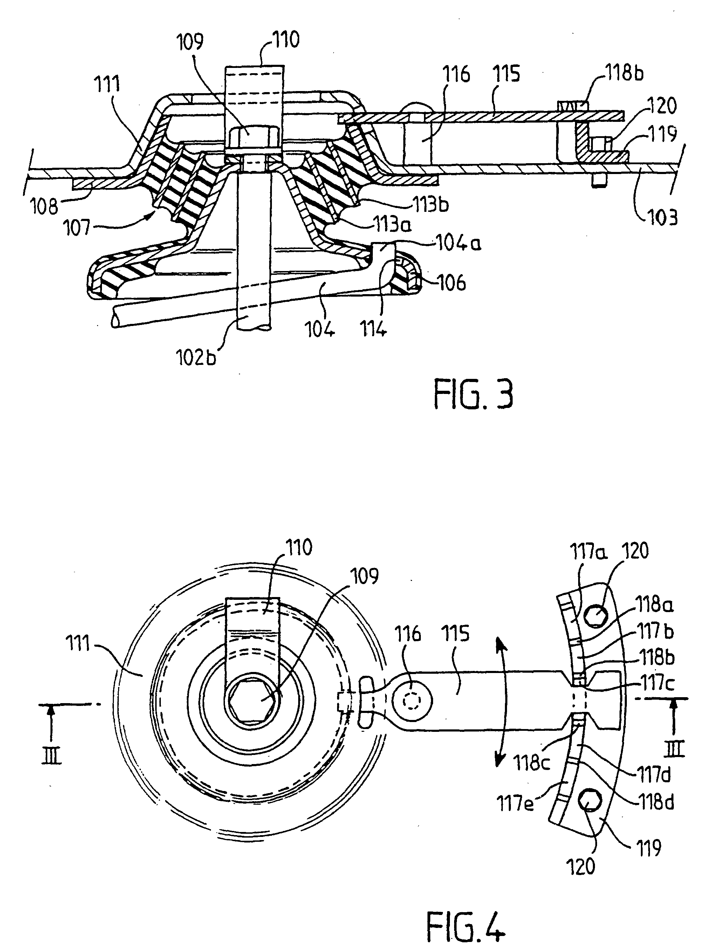

Sur les figures 3 et 4, la pièce 108 de fixation est réglable angulairement par rapport à la chapelle 111 de caisse 103. A cet effet, un levier 115 engagé dans un créneau à l'extrémité supérieure de la pièce 108 est monté sur un axe 116 solidaire de la caisse 103 ; on peut prévoir d'interposer un matériau antifriction entre la pièce 108 et la chapelle 111. L'extrémité du levier 115 opposée à l'extrémité soudée à la pièce 108 est conformée pour s'engager dans des évidements 117a à 117e séparés par des crans de réglage 118a à 118d. Les évidements 117 et les crans 118 sont pratiqués dans une pièce 119, par exemple, une cornière formée en arc de cercle, fixée à la caisse 103 par assemblage mécanique (boulonnage, vissage, soudage par points, etc ...).

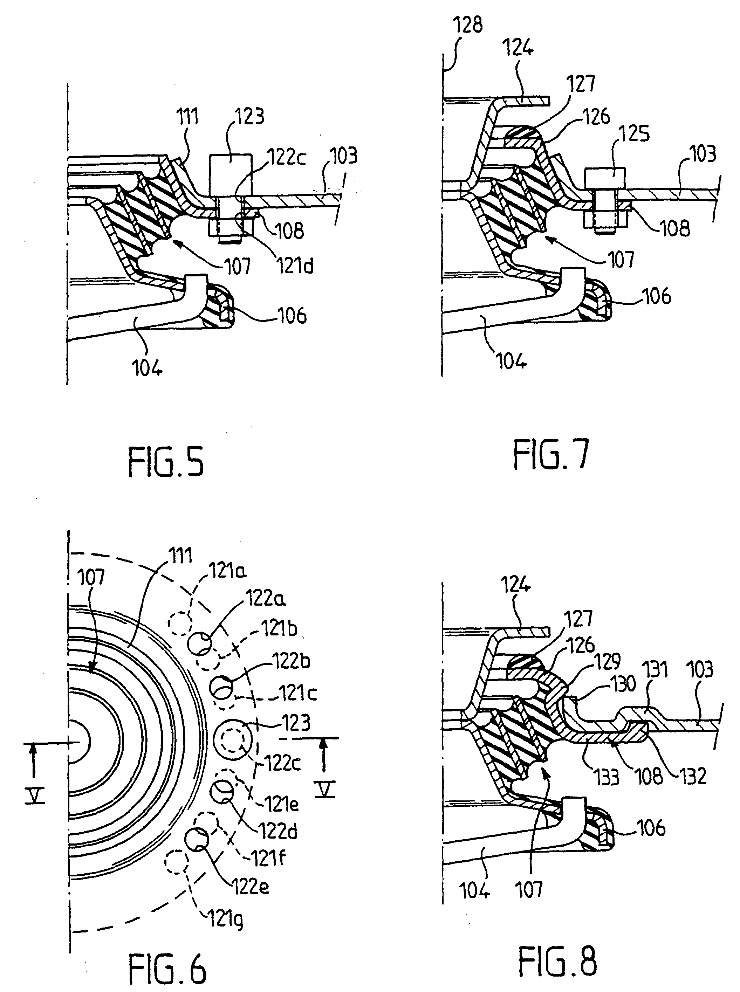

Sur les figures 5 et 6, la pièce 108 de fixation à la chapelle 111 de caisse 103 comporte une pluralité d'orifices 121a à 121g. La caisse 103 comporte au voisinage de la chapelle 111 une pluralité d'orifices 122a à 122e situés sensiblement sur le même diamètre que les orifices 121a à 121g. Les orifices 121 sont régulièrement espacés selon un pas différent du pas d'espacement régulier des orifices 122. Le réglage angulaire de la pièce de fixation 108 par rapport à la caisse 103 peut ainsi s'effectuer à la manière d'un vernier, de manière à réaliser une indexation angulaire précise de la pièce 108 de fixation par rapport à la caisse 103. Après avoir effectué ce réglage, on effectue l'assemblage mécanique de la pièce 108 à la chapelle 111 au moyen d'une vis ou d'un boulon 123 d'assemblage.

L'invention fournit ainsi un moyen de réglage en torsion de la suspension, de manière à compenser au moins partiellement des efforts de tirage ou de dérive dûs au pneumatique.

Sur la figure 7, la coupelle supérieure 106 est assemblée au moyen de la tige d'amortisseur 104b et de l'écrou 109 (non représentés) à une butée de détente 124 présentant avantageusement une forme de révolution. La pièce 108 de fixation à la caisse 103 au moyen de l'assemblage mécanique 125 présente une partie 126 radialement intérieure qui coopère avec la butée 124 de rebond ou de détente pour empêcher le dégagement de l'amortisseur en cas de décollage ou de soulèvement de roue de véhicule.

La partie 126 radialement intérieure est avantageusement revêtue ou au moins partiellement surmoulée par un matériau résistant aux chocs, par exemple un polyamide. Dans l'exemple représenté, le surmoulage 127 présente une forme annulaire sensiblement coaxiale à l'axe de révolution 128.

Ce mode avantageux de réalisation de l'invention permet la fabrication en usine de l'ensemble amortisseur comprenant la butée de détente 124, la partie radialement intérieure 126 de la pièce de fixation 108, l'ensemble lamifié 107, la coupelle supérieure 106, l'amortisseur 102 et le ressort 104 monté sur la coupelle inférieure 105.

Sur la figure 8, la pièce 108 de fixation présente un rebord annulaire 129 adapté pour s'encliqueter avec le rebord 130 de la caisse 103.

Pour assurer une indexation entre la caisse 103 et la pièce de fixation 108, la caisse 103 est pourvue d'une pluralité d'indentations 131 et la pièce 108 de fixation est munie d'une pluralité de bossages 132 monté sur des leviers flexibles 133. L'espacement des bossages 132 et des indentations 131 se fait selon un pas différent, de manière à assurer une indexation précise entre la caisse 103 et la pièce 108 de fixation par engagement d'un bossage 132 dans une indentation 131. Le réglage se fait à la manière d'un vernier, de manière analogue à ce qui a été décrit en référence à la figure 6.

Bien entendu, l'invention s'étend à la coopération de toute conformation en creux avec une conformation en relief situées respectivement sur la pièce 108 de fixation et sur la caisse 103.

L'invention n'est nullement limitée aux variantes de réalisation décrites ci-dessus, mais s'étend à tout dispositif comprenant un ressort et un amortisseur, comprenant un assemblage élastomère lamifié dont l'angle de rotation est sensiblement proportionnel aux couples appliqués sans présenter de seuil et présentant un agencement permettant la fabrication en usine d'un ensemble modulaire comprenant un amortisseur et un ressort associés, prêt à assembler directement à la caisse ou à la chapelle de caisse du véhicule.

## Revendications

1. Dispositif de suspension de roue (100) de véhicule comportant un amortisseur (102) monté entre le porte-moyeu (101) de la roue et la caisse (103) du véhicule, et un ressort (104) hélicoïdal monté entre une coupelle inférieure (105) solidaire du cylindre (102a) de l'amortisseur (102) et une coupelle supérieure (106) montée solidaire de la tige (102b) de l'amortisseur (102), **caractérisé par le fait que** la coupelle supérieure (106) est solidaire d'un assemblage élastomère (107) lamifié solidaire d'une pièce (108) de fixation à la caisse (103) du véhicule, ladite pièce (108) de fixation à la caisse étant réglable angulairement par rapport à la caisse (103).

2. Dispositif selon la revendication 1, **caractérisé par le fait que** la pièce (108) de fixation à la caisse (103) du véhicule est conformée en coupelle convexe pour s'adapter à la surface intérieure d'une chapelle (111) ménagée dans la caisse (103).

3. Dispositif selon l'une des revendications 1 et 2, **caractérisé par le fait que** l'extrémité (104a) supérieure du ressort hélicoïdal (104) est indexée angulairement par insertion dans une partie de l'une des coupelles inférieure (105) ou supérieure (106), ladite partie étant surmoulée par un matériau élastomère.

4. Dispositif selon la revendication 3, **caractérisé par le fait que** la pièce (108) de fixation est montée pivotante par rapport à la caisse (103) par l'intermédiaire d'un levier (115) de réglage en rotation.

5. Dispositif selon la revendication 3, **caractérisé par le fait que** la pièce (108) de fixation et la caisse (103) comportent chacune une pluralité d'orifices (121, 122) situés sur un même diamètre et espacés de manière à permettre une indexation angulaire lors de l'assemblage mécanique (123) de la pièce (108) de fixation à la caisse et de la caisse (103).

6. Dispositif selon l'une des revendications 1 à 5, **caractérisé par le fait que** la pièce (108) de fixation à la caisse présente une partie (126) radialement intérieure coopérant avec une butée (124) de détente pour empêcher le dégagement de l'amortisseur en cas de décollage de la roue de véhicule et de rupture de l'assemblage élastomère lamifié (107).

7. Dispositif selon la revendication 6, **caractérisé par le fait que** la partie radialement intérieure (126) est revêtue au moins partiellement ou surmoulée par un matériau (127) amortisseur de choc.

8. Dispositif selon la revendication 3, **caractérisé par le fait que** la caisse (103) comporte une pluralité de premières conformations (131) et la pièce (108) de fixation à la caisse une pluralité de deuxièmes conformations (132), et **par le fait que**, pour assurer une indexation entre caisse (103) et pièce (108) de fixation à la caisse, une première conformation (131) de la caisse (103) coopère avec une deuxième conformation (132) de la pièce (108) de fixation à la caisse.

9. Dispositif selon l'une des revendications 1 à 8, **caractérisé par le fait que** la pièce (108) de fixation à la caisse est conformée pour s'encliqueter dans la caisse (103).

## Patentansprüche

1. Aufhängungsvorrichtung für ein Fahrzeugrad (100), mit einem Stoßdämpfer (102), der zwischen dem Achsträger (101) des Rades und dem Fahrzeugaufbau (103) angebracht ist, und mit einer wendelförmigen Feder (104), die zwischen einem unteren Teller (105), der fest mit dem Zylinder (102a) des Stoßdämpfers (102) verbunden ist, und einem oberen Teller (106) angebracht ist, der fest mit der Stange (102b) des Stoßdämpfers (102) verbunden ist, **dadurch gekennzeichnet, daß** der obere Teller (106) fest mit einem laminierten Elastomeranschluß (107) verbunden ist, der fest mit einem Stück (108) zur Befestigung am Aufbau (103) des Fahrzeugs verbunden ist, wobei das genannte Stück (108) zur Befestigung am Aufbau in der Winkelstellung bezüglich des Aufbaus (103) einstellbar ist.

2. Vorrichtung nach Anspruch 1, **dadurch gekennzeichnet, daß** das Stück (108) zur Befestigung am Aufbau (103) des Fahrzeugs als konvexer Teller ausgebildet ist, um sich an die Innenoberfläche einer hutförmigen Ausbildung (111) anzupassen, die in den Aufbau (103) eingebracht ist.

3. Vorrichtung nach einem der Ansprüche 1 und 2, **dadurch gekennzeichnet, daß** das obere Ende (104a) der wendelförmigen Feder (104) durch Einführen in einen Teil des unteren (105) oder oberen (106) Tellers in der Winkellage indexiert ist, wobei der genannte Teil durch ein Elastomermaterial aufgeformt ist.

4. Vorrichtung nach Anspruch 3, **dadurch gekennzeichnet, daß** das Befestigungsstück (108) bezüglich des Aufbaus (103) mittels eines Dreh-Einstellhebels (115) schwenkbar angebracht ist.

5. Vorrichtung nach Anspruch 3, **dadurch gekennzeichnet, daß** das Befestigungsstück (108) und der Aufbau (103) jeweils eine Vielzahl von Öffnungen (121, 122) aufweisen, die auf ein und demselben Durchmesser und derart beabstandet gelegen sind, daß während des mechanischen Anschlusses (123) des Stücks (108) zur Befestigung am Aufbau und des Aufbaus (103) eine winklige Indexierung gestattet ist.

6. Vorrichtung nach einem der Ansprüche 1 bis 5, **dadurch gekennzeichnet, daß** das Stück (108) zur Befestigung am Aufbau einen radial inneren Teil (126) aufweist, der mit einem Arretierungsanschlag (124) zusammenwirkt, um das Freikommen des Eingriffs des Stoßdämpfers im Fall des Lösens des Fahrzeugsrades und des Bruchs des laminierten Elastomeranschlusses (107) zu verhindern.

7. Vorrichtung nach Anspruch 6, **dadurch gekennzeichnet, daß** der radial innere Teil (126) mindestens teilweise mit einem stoßdämpfenden Material (127) verkleidet oder durch Aufformen beschichtet ist.

8. Vorrichtung nach Anspruch 3, **dadurch gekennzeichnet, daß** der Aufbau (103) eine Vielzahl von ersten Ausbildungen (131) und das Stück (108) zur Befestigung am Aufbau eine Vielzahl zweiter Ausbildungen (132) aufweist, und daß zum Sicherstellen einer Indexierung zwischen dem Aufbau (103) und dem Stück (108) zur Befestigung am Aufbau eine erste Ausbildung (131) des Aufbaus (103) mit einer zweiten Ausbildung (132) des Stücks (108) zur Befestigung am Aufbau zusammenwirkt.

9. Vorrichtung nach einem der Ansprüche 1 bis 8, **dadurch gekennzeichnet, daß** das Stück (108) zur Befestigung am Aufbau so ausgebildet ist, daß es sich mit dem Aufbau (103) verrastet.

## Claims

1. Suspension device for the wheel (100) of a vehicle, comprising a shock absorber (102) mounted between the hub carrier (101) of the wheel and the body (103) of the vehicle, and a helicoid spring (104) mounted between a lower spring plate (105) integral with the cylinder (102a) of the shock absorber (102) and an upper spring plate (106) mounted integral with the rod (102b) of the shock absorber (102), **characterised in that** the upper spring plate (106) is integral with a laminated elastomeric assembly (107) which is integral with a part (108) for attachment to the body (103) of the vehicle, said part (108) for attachment to the body being angularly adjustable with respect to the body (103).

2. Device according to claim 1, **characterised in that** the part (108) for attachment to the body (103) of the vehicle is shaped into a convex cup so that it fits the interior surface of a suspension tower (111) provided in the body (103).

3. Device according to one of the claims 1 and 2, **characterised in that** the upper end (104a) of the helicoid spring (104) is angularly indexed by insertion into a part of one of the lower (105) or upper (106) spring plates, said part being overmoulded with an elastomeric material.

4. Device according to claim 3, **characterised in that** the attachment part (108) is mounted so that it can pivot with respect to the body (103) by means of a lever (115) for an adjustment in rotation.

5. Device according to claim 3, **characterised in that** the attachment part (108) and the body (103) each comprise a plurality of orifices (121, 122) which are situated on one and the same diameter and are spaced apart so as to allow angular indexing during mechanical assembly (123) of the part (108) for attachment to the body and the body (103).

6. Device according to one of the claims 1 to 5, **characterised in that** the part (108) for attachment to the body has a radially inner part (126) cooperating with a backspring limit stop (124) in order to prevent the shock absorber from disengaging if the vehicle wheel lifts off the road surface and the laminated elastomeric assembly (107) breaks.

7. Device according to claim 6, **characterised in that** the radially inner part (126) is coated at least partially or overmoulded with a shock-absorbing material (127).

8. Device according to claim 3, **characterised in that** the body (103) comprises a plurality of first shapings (131) and the part (108) for attachment to the body comprises a plurality of second shapings (132), and **in that**, so as to ensure indexing between the body (103) and the part (108) for attachment to the body, a first shaping (131) of the body (103) cooperates with a second shaping (132) of the part (108) for attachment to the body.

9. Device according to one of the claims 1 to 8, **characterised in that** the part (108) for attachment to the body is shaped to snap-fasten into the body (103).
